# EUROPEAN PATENT APPLICATION

(11) **EP 2 357 378 A2**
(43) Date of publication of application: **17.08.2011**
(21) Application number: 11152762.8
(22) Date of filing: 31.01.2011
(51) Int. Cl.: F16F 9/512

(54) **Shock absorber and shock absorber unit**

(30) Priority: 17.02.2010 JP 2010032106
(71) Applicant: Koganei Corporation, Koganei-shi, Tokyo 184-8533 (JP)
(72) Inventor: Omura, Yuta, Koganei-Shi Tokyo 184-8533 (JP)
(74) Representative: Vogel, Andreas

(57) **Abstract**

A first accumulator which absorbs volume increase caused inside a cylindrical case is provided to a base-portion room, a first main flow path in which silicon oil flows is provided between an inner peripheral wall of the cylindrical case and an outer peripheral wall of the first piston, and a second inner peripheral wall by which an opening area of the first main flow path is gradually decreased by movement of the first piston toward the opening-portion room side is provided in an inner peripheral wall of the cylindrical case. Therefore, the flow resistance of the silicon oil flowing in the first main flow path is increased as the first piston is moved closer toward the opening room side, so that the resistive force is generated on the pulling side.

## Description

### TECHNICAL FIELD OF THE INVENTION

The present invention relates to a shock absorber and a shock absorber unit of, when a movable portion of an actuator is stopped, easing impact force applied to the movable portion.

### BACKGROUND OF THE INVENTION

Conventionally, in order to move an electric component or precision machinery component (workpiece) to a next process, a pneumatic actuator (actuator) having a reciprocating table (movable portion) reciprocated by supplying and exhausting compressed air is used sometimes. The pneumatic actuator has, for example, an air cylinder to which the compressed air is supplied and exhausted, and a piston is movably provided inside the air cylinder. One end of a rod is fixed to the piston, and the other end thereof is fixed to the reciprocating table. In this manner, the piston is reciprocated by supplying and exhausting the compressed air into/from the inside of the air cylinder, and the reciprocating table is reciprocated through the rod, so that the electronic component or the precision machinery component can be moved.

When the electric component or the precision machinery component is moved by the pneumatic actuator or others, the applied impact force is desired to be suppressed as small as possible. Accordingly, in order to ease the impact force applied to the electric component or the precision machinery component, a shock absorber (buffer) is provided at a reciprocating end position of the reciprocating table. In this manner, the shock absorber is operated at the reciprocating end position of the reciprocating table, so that the impact force applied to the electric component or the precision machinery component can be eased.

As such a shock absorber used in a pneumatic actuator, for example, the one described in Japanese Utility-Model Application Laid-Open Publication No. S61-016440, FIG. 3 (Patent Document 1) is known. The shock absorber described in Patent Document 1 includes: a cylinder having a base portion and an opening portion; a piston moving inside the cylinder in an axial direction; a piston rod whose one end is jointed to the piston and whose other end is extended outside the cylinder; and liquid filled inside the cylinder. A taper portion whose diameter is gradually reduced toward the base portion of the cylinder is provided on an inner peripheral wall of the cylinder, so that a flow passage area formed between the piston and the cylinder is reduced as the piston moves closer toward the base portion side of the cylinder. That is, as the piston moves closer toward the base portion side of the cylinder, a flow resistance of the liquid flowing from the piston to the cylinder is increased, so that the impact force applied to the electric component or others can be eased at the reciprocating end portion of the reciprocating table. In this manner, the shock absorber described in Patent Document 1 is the one which causes resistive force (damping force) when a pushing side, that is, the piston rod is pushed inside the cylinder.

Also, as the shock absorber, in addition to the one which causes the resistive force at the pushing side as described in Patent Document 1, there is the one which causes resistive force at both of a pushing side and a pulling side as described in, for example, Japanese Patent Application Laid-Open Publication No. 2005-009568, Fig. 1 (Patent Document 2). The shock absorber described in Patent Document 2 is a steering damper provided between a steering portion and a frame portion of a motorcycle or others, and has a structure in which the resistive force can be caused in a substantial whole area of a stroke regardless of a stroke position of a piston relative to an inner cylinder. That is, when the technique for the shock absorber described in Patent Document 2 is used for the pneumatic actuator, fast moving of the reciprocating table of the pneumatic actuator is disturbed.

### SUMMARY OF THE INVENTION

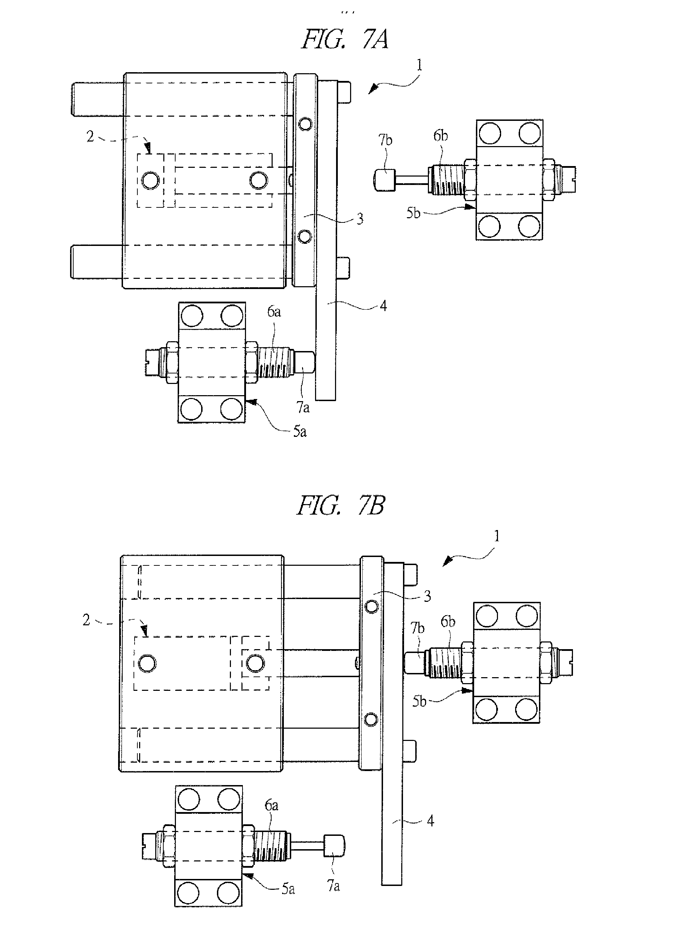

FIGS. 7A and 7B are views illustrating an example in which a shock absorber according to a conventional technique is used for a pneumatic actuator.

As illustrated in FIGS. 7A and 7B, a pneumatic actuator 1 includes an air cylinder 2, and a movable portion 3 can be reciprocated in right and left directions of FIGS. 7A and 7B by supplying and exhausting compressed air into/from the air cylinder 2. A reciprocating table (not illustrated) is fixed to the movable portion 3, and an electronic component or others is placed on the reciprocating table. A receiving plate 4 is integrally provided with the movable portion 3, and cap portions 7a and 7b of shock absorbers 6a and 6b configuring a pair of shock absorber units 5a and 5b are abutted against both sides (right and left sides in FIGS. 7A and 7B) of the receiving plate 4 in a plate-thickness direction, respectively.

On the both sides of the receiving plate 4 in the plate-thickness direction, each of the shock absorber units 5a and 5b is oppositely arranged so that the cap portions 7a and 7b are opposed to each other. The shock absorber 6a is pushed and shrunk by the receiving plate 4 when the movable portion 3 moves toward the left side as illustrated in FIG. 7A, and the shock absorber 6b is pushed and shrunk by the receiving plate 4 when the movable portion 3 moves toward the right side as illustrated in FIG. 7B.

Since both of the shock absorbers 6a and 6b are the pushing-side shock absorber, it is required to arrange each of the shock absorber units 5a and 5b at positions away from each other so as to sandwich the receiving plate 4 therebetween. Therefore, in addition to forming a large receiving plate 4 because of its lengthening, a large space is required to arrange each of the shock absorber units 5a and 5b. Also, it is required to individually fix each of the shock absorber units 5a and 5b on a mount or others, and therefore, time is required to arrange the pneumatic actuator. Further, alignment operation for each of the shock absorber units 5a and 5b, that is alignment for a relative positional relationship between the receiving plate 4 and each of the shock absorbers 6a and 6b, is not simple.

A preferred aim of the present invention is to provide a shock absorber and a shock absorber unit in which an arrangement operation for an actuator can be simplified and an adjustment operation for the shock absorber unit can be easily performed by decreasing an arrangement space for the shock absorber unit.

A shock absorber according to the present invention includes: a cylinder having a base portion and an opening portion, in which liquid is filled; a holder attached to the opening portion of the cylinder and having a rod-guiding hole; a rod slidably supported by the rod-guiding hole, whose one end is provided inside the cylinder and whose other end is provided outside the cylinder; a piston provided on the one end of the rod and dividing an inside of the cylinder into a base-portion room and an opening-portion room; an accumulator absorbing volume increase caused inside the cylinder by entering of the rod into the cylinder; a main flow path provided between an inner peripheral wall of the cylinder and an outer peripheral wall of the piston, in which the liquid flows when the piston moves relative to the cylinder; and an opening-area adjusting wall forming the inner peripheral wall of the cylinder and gradually decreasing an opening area of the main flow path as movement of the piston closer toward the opening-portion room side.

In the shock absorber according to the present invention, the piston is slidably provided to the rod, a sub flow path for connecting the base-portion room and the opening-portion room is provided between an inner periphery of the piston and an outer periphery of the rod, and there is provided, in the rod, a sub-flow-path opening/closing member for closing the sub flow path when the piston moves toward the opening-portion room side relative to the rod.

In the shock absorber according to the present invention, a fixed portion fixed to the movable portion of the actuator is provided on the other end of the rod.

In the shock absorber according to the present invention, the accumulator is formed of an elastic member consisting of foam rubber.

In the shock absorber according to the present invention, the accumulator includes: a free piston sliding across the base-portion room; a seal member provided between an outer periphery of the free piston and an inner periphery of the cylinder; and a spring pressing the free piston toward the opening-portion room.

A shock absorber unit according to the present invention includes: a first shock absorber; a second shock absorber; and a supporting member. The first shock absorber includes: a first cylinder having a base portion and an opening portion, in which liquid is filled; a first holder attached to the opening portion of the first cylinder and having a first rod-guiding hole; a first rod slidably supported by the first rod-guiding hole, whose one end is provided inside the first cylinder and whose other end is provided outside the first cylinder; a first piston provided on the one end of the first rod and dividing an inside of the first cylinder into a base-portion room and an opening-portion room; a first accumulator absorbing volume increase caused inside the first cylinder by entering of the first rod into the first cylinder; a first main flow path provided between an inner peripheral wall of the first cylinder and an outer peripheral wall of the first piston, in which the liquid flows when the first piston moves relative to the first cylinder; and a first opening-area adjusting wall forming the inner peripheral wall of the first cylinder and gradually decreasing an opening area of the first main flow path as movement of the first piston closer toward the opening-portion room side. The second shock absorber includes: a second cylinder having a base portion and an opening portion, in which liquid is filled; a second holder attached to the opening portion of the second cylinder and having a second rod-guiding hole; a second rod slidably supported by the second rod-guiding hole, whose one end is provided inside the second cylinder and whose other end is provided outside the second cylinder; a second piston provided to the one end side of the second rod and dividing an inside of the second cylinder into a base-portion room and an opening-portion room; a second accumulator absorbing volume increase caused inside the second cylinder by entering of the second rod into the second cylinder; a second main flow path provided between an inner peripheral wall of the second cylinder and an outer peripheral wall of the second piston, in which the liquid flows when the second piston moves relative to the second cylinder; and a second opening-area adjusting wall forming the inner peripheral wall of the second cylinder and gradually decreasing an opening area of the second main flow path as movement of the second piston closer toward the base-portion room side. The supporting member supports the first rod of the first shock absorber and the second rod of the second shock absorber so that they are parallel to each other.

In the shock absorber unit according to the present invention, the first piston is slidably provided to the first rod, a first sub flow path for connecting the base-portion room and the opening-portion room is provided between an inner periphery of the first piston and an outer periphery of the first rod, there is provided, in the first rod, a first sub-flow-path opening/closing member for closing the first sub flow path when the first piston moves toward the opening-portion room side relative to the first rod, the second piston is slidably provided to the second rod, a second sub flow path for connecting the base-portion room and the opening-portion room is provided between an inner periphery of the second piston and an outer periphery of the second rod, and there is provided, in the second rod, a second sub-flow-path opening/closing member for closing the second sub flow path when the second piston moves toward the base-portion room side relative to the second rod.

In the shock absorber unit according to the present invention, a fixed portion fixed to a movable portion of the actuator is provided on the other end of the first rod.

In the shock absorber unit according to the present invention, at least one of the first and second accumulators is formed of an elastic member consisting of foam rubber.

In the shock absorber unit according to the present invention, at least one of the first or second accumulator includes: a free piston sliding across the base-portion room; a seal member provided between an outer periphery of the free piston and an inner periphery of the first or second cylinder; and a spring pressing the free piston toward the opening-portion room.

According to the shock absorber of the present invention, the accumulator absorbing the volume increase caused inside the cylinder by entering of the rod into the cylinder is provided, the main flow path in which the liquid flows when the piston moves relative into the cylinder is provided between the inner peripheral wall of the cylinder and the outer peripheral wall of the piston, and the opening-area adjusting wall gradually decreasing the opening area of the main flow path as movement of the piston closer toward the opening-portion room side is provided in the inner peripheral wall of the cylinder. Therefore, flow resistance of the liquid flowing in the main flow path is increased as the piston moves closer toward the opening-portion room side of the cylinder, so that the pulling-side shock absorber of generating resistive force (damping force) can be achieved.

According to the shock absorber of the present invention, the piston is slidably provided to the rod, the sub flow path for connecting the base-portion room and the opening-portion room is provided between the inner periphery of the piston and the outer periphery of the rod, and there is provided, in the rod, the sub-flow-path opening/closing member for closing the sub flow path when the piston moves toward the opening-portion room side relative to the rod. Therefore, difference between resistive forces generated on a pulling side and a pushing side can be increased, and, for example, sufficiently-large resistive force can be generated on the pulling side and almost no resistive force can be generated on the pushing side.

According to the shock absorber of the present invention, the fixed portion fixed to the movable portion of the actuator is provided on the other end of the rod, and therefore, the rod and the movable portion can be fixedly held to each other. Therefore, the shock absorber can be exactly functioned as a pulling-side shock absorber.

According to the shock absorber of the present invention, the accumulator is formed of the elastic member consisting of foam rubber, and therefore, the accumulator can be formed of one component, so that the number of components can be reduced to suppress a manufacturing cost.

According to the shock absorber of the present invention, the accumulator includes: the free piston sliding across the base-portion room; the seal member provided between the outer periphery of the free piston and the inner periphery of the cylinder; and the spring pressing the free piston toward the opening-portion room, and therefore, durability of the accumulator can be improved, so that a long-life accumulator can be achieved.

According to the shock absorber unit of the present invention, the first shock absorber is the pulling-side shock absorber, the second shock absorber is the pushing-side shock absorber, and the supporting member supporting each rod of each shock absorber so that they are parallel to each other is provided. Therefore, the shock absorbers can be collected by the supporting member, so that the shock absorber unit can be arranged only on one side of the movable portion of the actuator in the movement direction. In this manner, an arrangement space for the shock absorber unit can be downsized, so that an adjustment operation for the shock absorber unit can be easily performed and an arrangement operation for the actuator can be simplified.

According to the shock absorber unit of the present invention, the first sub-flow-path opening/closing member for closing the first sub flow path by the movement of the first piston toward the opening-portion room side relative to the first rod is provided in the first shock absorber, and the second sub-flow-path opening/closing member for closing the second sub flow path by the movement of the second piston toward the base-portion room side relative to the second rod is provided in the second shock absorber. In this manner, difference between resistive forces generated on the pulling side and the pushing side can be increased in each shock absorber.

### BRIEF DESCRIPTIONS OF THE DRAWINGS

FIG. 1A is a view illustrating an example in which a shock absorber according to the present invention is used for a pneumatic actuator;
FIG. 1B is a view illustrating an example in which the shock absorber according to the present invention is used for the pneumatic actuator;
FIG. 2 is a cross-sectional view of a first shock absorber (at retraction of a first piston) according to a first embodiment;
FIG. 3 is a cross-sectional view of the first shock absorber (at stretch of the first piston) according to the first embodiment;
FIG. 4 is a cross-sectional view of a second shock absorber (at retraction of a second piston) used in a shock absorber unit in FIGS. 1A and 1B;
FIG. 5 is a cross-sectional view of the second shock absorber (at stretch of the second piston) used in the shock absorber unit in FIGS. 1A and 1B;
FIG. 6A is a cross-sectional view of a first shock absorber (at retraction of a first piston) according to a second embodiment;
FIG. 6B is a cross-sectional view of the first shock absorber (at stretch of the first piston) according to the second embodiment;
FIG. 7A is a view illustrating an example in which a shock absorber according to a conventional technique is used for a pneumatic actuator; and
FIG. 7B is a view illustrating the example in which the shock absorber according to the conventional technique is used for the pneumatic actuator.

### DESCRIPTIONS OF THE PREFERRED EMBODIMENTS

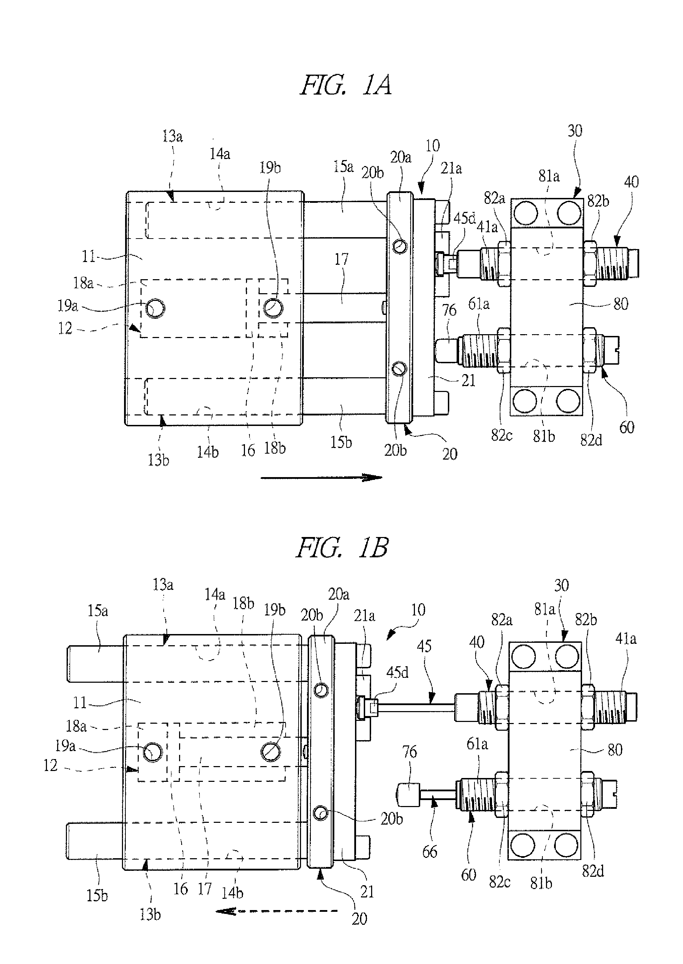

Hereinafter, a first embodiment of the present invention will be described in detail with reference to the drawings. FIGS. 1A and 1B are views illustrating examples in which a shock absorber according to the present invention is used for a pneumatic actuator.

As illustrated in FIGS. 1A and 1B, a pneumatic actuator 10 functioning as an actuator includes a main body 11 having a substantially cuboid shape and fixed on a mount (not illustrated), and an air cylinder 12 is provided inside the main body 11. The air cylinder 12 is arranged in a substantially center portion of the main body 11 in a width direction (up and down directions in the figures), and a pair of sliding systems 13a and 13b are provided on respective both sides by which an axial line of the air cylinder 12 is sandwiched. The sliding systems 13a and 13b are formed of: a pair of guiding holes 14a and 14b formed in the main body 11; and a pair of sliding members 15a and 15b sliding inside the guiding holes 14a and 14b, respectively. Each of the sliding systems 13a and 13b functions as a guiding system of linearly reciprocating the air cylinder 12 without scraping.

The air cylinder 12 is formed in a hollow shape, and a piston member 16 reciprocatably sliding in the axial direction is provided inside the air cylinder. Other end (left side in the figures) of a rod member 17 in the axial direction is fixed to the piston member 16, and one end (right side in the figures) of the rod member 17 in the axial direction is extended outside the air cylinder 12. A pair of air chambers 18a and 18b are provided on both sides of the piston member 16 in its movement direction, and ports 19a and 19b are provided in the air chambers 18a and 18b, respectively. An air circuit (not illustrated) formed of a compressor, a solenoid valve, or others is connected to each of the ports 19a and 19b through an air tube.

Here, by supplying compressed air from the air compressor or others into the air chamber 18a and releasing air from the air chamber 18b, the piston member 16 is moved inside the air cylinder 12 to protrude or stretch the rod member 17 from the inside of the air cylinder 12 as illustrated in FIG. 1A with a solid arrow. On the other hand, by supplying compressed air from the air compressor or others into the air chamber 18b and releasing air from the air chamber 18a, the piston member 16 is moved inside the air cylinder 12 to retract the rod member 17 into the air cylinder 12 as illustrated in FIG. 1B with a dashed arrow.

A movable member 20 is fixed on one end side of each of the sliding members 15a and 15b and the rod member 17. The movable member 20 is made of steel in a substantially plate shape, and a pair of female-screw portions 20b to which fixation screws (not illustrated) for fixing the reciprocating table are screwed are provided in a side-wall portion 20a of the movable member 20. Note that, on the reciprocating table, an electronic component or a precision machinery component (not illustrated) as a workpiece is placed.

On an opposite side of the movable member 20 to the rod member 17 side, a receiving plate 21 made of steel in a substantially plate shape is fixed. A fixed portion 45d of a first shock absorber 40 is fixed to the receiving plate 21, and further, a cap member 76 of a second shock absorber 60 is abutted against the receiving plate 21. That is, the receiving plate 21 receives resistive force (damping force) of each of the shock absorbers 40 and 60.

A fixing portion 21a engaged with the fixed portion 45d of the first shock absorber 40 is integrally provided with the receiving plate 21, and the fixed portion 45d of the first shock absorber 40 is fitted to be inserted from a front side in the figures into the fixing portion 21a. Here, the movable member 20, the reciprocating table fixed to the movable member 20, and the receiving plate 21 configure the movable portion according to the present invention.

A shock absorber unit 30 is provided on the movable member 20 side of the pneumatic actuator 10 so as to interpose a predetermined space therebetween, and the shock absorber unit 30 is also fixed on the mount similarly to the main body 11 of the pneumatic actuator 10. The shock absorber unit 30 includes: the first shock absorber 40; the second shock absorber 60; and a supporting member 80 for supporting each of the shock absorbers 40 and 60.

A pair of supporting holes 81 a and 81b for supporting respective shock absorbers 40 and 60 are formed in the supporting member 80, and the supporting holes 81a and 81b b are parallel to each other. A female-screw portion (not illustrated) is formed inside each of the supporting holes 81a and 81 b, and male-screw portions 41a and 61a of the shock absorbers 40 and 60 are screwed into the female-screw portions of the supporting holes 81a and 81 b, respectively. The supporting member 80 supports each of the shock absorbers 40 and 60 so that respective rods 45 and 66 of the shock absorbers 40 and 60 are parallel to each other and vertical to the receiving plate 21.

And, by screwing the shock absorbers 40 and 60 into the supporting holes 81a and 81b by a certain distance, respectively, the relative positional relationship between the receiving plate 21 and each of the shock absorbers 40 and 60 is adjusted. Note that, by screwing hexagon nuts 82a to 82d into the shock absorbers 40 and 60, loosing of the shock absorbers 40 and 60 from the supporting member 80 is prevented, respectively.

The first shock absorber 40 is the pulling-side shock absorber of generating the resistive force when the first rod 45 is pulled, that is in the protruding direction. Therefore, as illustrated in FIG. 1B with the dashed arrow, the first shock absorber 40 is operated when the air cylinder 12 is operated to draw the movable member 20 toward the main body 11. On the other hand, the second shock absorber 60 is the pushing-side shock absorber of generating the resistive force when the second rod 66 is pushed. Therefore, as illustrated in FIG. 1A with the solid arrow, the second shock absorber 60 is operated when the air cylinder 12 is operated to push the movable member 20 away from the main body 11.

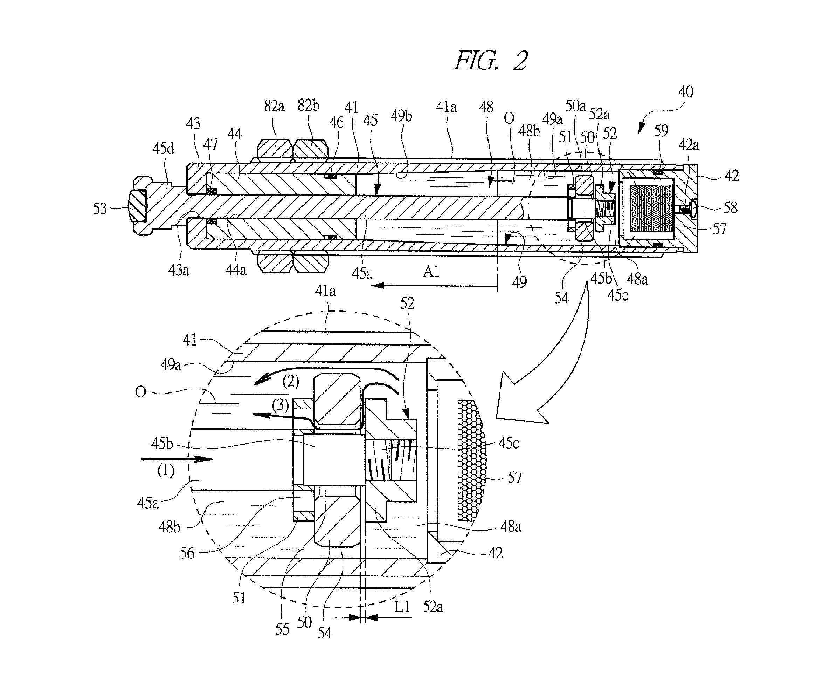

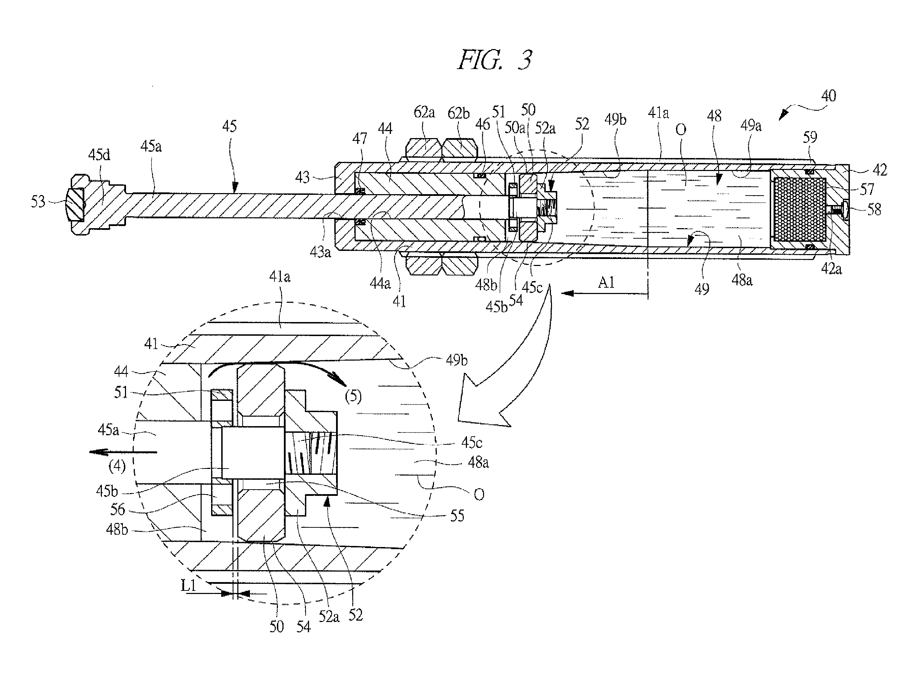

FIG. 2 is a cross-sectional view of the first shock absorber (at retraction of the first piston) according to the first embodiment, and FIG. 3 is a cross-sectional view of the first shock absorber (at stretch of the first piston) according to the first embodiment.

The first shock absorber 40 illustrated in FIGS. 2 and 3 is the shock absorber according to the present invention, and includes a cylindrical case 41 made of steel in a substantially cylindrical shape. One end of the cylindrical case 41 is closed by an end cover 42, and a rod cover 43 is integrally provided with the other end of the cylindrical case 41. The other end of the cylindrical case 41 is opened through an opening portion 43a of the rod cover 43. Here, the cylindrical case 41, end cover 42, and rod cover 43 configure the cylinder and the first cylinder according to the present invention, and the end cover 42 configures the cylinder and the base portion of the first cylinder according to the present invention.

The male-screw portion 41a to be screwed into the supporting hole 81a (see in FIG. 1) of the supporting member 80 is provided on an outer periphery of the cylindrical case 41, and a pair of hexagonal nuts 82a and 82b are screwed to connect the male-screw portion 41 a.

A first holder (holder) 44 formed in a substantially cylindrical shape is attached on the opening portion 43a side of the cylindrical case 41, and a first rod-guiding hole (rod-guiding hole) 44a extending in the axial direction is provided in the first holder 44. The first rod-guiding hole 44a slidably supports the first rod (rod) 45, and the first rod-guiding hole 44a guides to smoothly move the first rod 45 relative to the cylindrical case 41.

An O ring 46 made of rubber is provided between an outer periphery of the first holder 44 and an inner periphery of the cylindrical case 41, and the O ring 46 seals a space between the first holder 44 and the cylindrical case 41. A rod packing 47 made of rubber is attached on the opening portion 43a side of the first rod-guiding hole 44a, and the rod packing 47 is slidably contacted with the first rod 45. The rod packing 47 seals a space between the first rod 45 and the first rod-guiding hole 44a.

A liquid storage room 48 is provided inside the cylindrical case 41, and silicon oil "O" as liquid is filled inside the liquid storage room 48. The liquid storage room 48 is surrounded by an inner peripheral wall 49 of the cylindrical case 41. In the inner peripheral wall 49 on one end of the cylindrical case 41, a first inner peripheral wall 49a whose inner diameter is constant toward the end cover 42 side of the cylindrical case 41 is formed. In the inner peripheral wall 49 on the other end of the cylindrical case 41, a second inner peripheral wall 49b having a taper shape whose diameter is gradually decreased toward the opening portion 43a side of the cylindrical case 41 is formed.

One end of the first rod 45 is provided inside the cylindrical case 41, and a small-diameter portion 45b whose diameter is smaller than that of a rod main body 45a is provided on the one end of the first rod 45. A flow-path member 51 is integrally formed with the first rod 45. A first piston (piston) 50 is attached to the small-diameter portion 45b between the flow-path member 51 and a nut member 52 so as to be movable in the axial direction. The first piston 50 divides the liquid storage room 48 into a base-portion room 48a and an opening-portion room 48b. Both of the first piston 50 and the flow-path member 51 are formed in a substantially disk shape, and a thickness of the first piston 50 in the axial direction is smaller than that of the small-diameter portion 45b in the axial direction between the flow-path member 51 and the nut member 52. In this manner, the first piston 50 can be moved relative to the small-diameter portion 45b by a predetermined distance "L1".

On outer one end of the first rod 45 than the small-diameter portion 45b, a male-screw portion 45c is provided. A nut member 52 is screwed to connect the male-screw portion 45c, and the nut member 52 prevents to drop the first piston 50 from the small-diameter portion 45b. A ring-shaped flange portion 52a swelling outside in the diameter direction is integrally provided with the nut member 52, and the flange portion 52a is abutted against the first piston 50.

The other end of the first rod 45 is provided outside the cylindrical case 41, and the fixed portion 45d whose outer diameter is larger than an inner diameter of the opening portion 43a and which has a shoulder shape is provided on the other end of the first rod 45. The fixed portion 45d is abutted against the rod cover 43 to limit an entering distance of the first rod 45 into the cylindrical case 41, and is engaged with the fixing portion 21a (see in FIG. 1) provided on the receiving plate 21 of the pneumatic actuator 10. A cushion member 53 is attached to the fixed portion 45d, and the cushion member 53 is contacted with the receiving plate 21 as causing elastic deformation, so that noises or others are prevented.

Between the inner peripheral wall 49 of the cylindrical case 41 and an outer peripheral wall 50a of the first piston 50, there is provided a first main flow path (main flow path) 54 allowing the movement of the silicon oil O from the base-portion room 48a to the opening-portion room 48b when the first piston 50 moves relative to the cylindrical case 41. When the first piston 50 moves on the first inner peripheral wall 49a side, the flow area of the first main flow path 54 is constant and is secured to be relatively large, so that the flow resistance of the silicon oil O is almost not caused. On the other hand, when the first piston 50 moves on the second inner peripheral wall 49b side toward the opening portion 43a side, the flow area (opening area) of the first main flow path 54 is gradually decreased, and the first main flow path 54 is gradually narrowed, so that the flow resistance of the silicon oil O is gradually increased. Here, the second inner peripheral wall 49b configures the opening-area adjusting wall and the first opening-area adjusting wall according to the present invention.

Between an inner periphery of the first piston 50 and an outer periphery of the small-diameter portion 45b, a piston sub flow path 55 for connecting between a base-portion room 48a and an opening-portion room 48b is provided. A plurality (for example, four pieces which are provided in each constant interval) of the piston sub flow paths 55 are provided inside the first piston 50 in the diameter direction along the peripheral direction. One end of each piston sub flow path 55 is closed by the flange portion 52a when the first piston 50 is abutted against the flange portion 52a, so that each piston sub flow path 55 is shut down. Here, the nut member 52 configures the sub-flow-path opening/closing member and the first sub-flow-path opening/closing member according to the present invention.

A flow-path-member sub flow path 56 for connecting between the base-portion room 48a and the opening-portion room 48b is provided in the flow path member 51. A plurality (for example, four pieces which are provided in each constant interval) of the flow-path-member sub flow paths 56 are provided inside the flow path member 51 in the diameter direction along the peripheral direction. Each piston sub flow path 55 and each flow-path-member sub flow paths 56 are connected with each other, and the sub flow paths 55 and 56 configure the sub flow path and the first sub flow path according to the present invention.

A first accumulator (accumulator) 57 made of an elastic member consisting of foam rubber or others in a substantially column shape is provided inside the end cover 42, that is inside the base-portion room 48a. The first accumulator 57 absorbs volume increase caused inside the cylindrical case 41 by entering of the first rod 45 into the cylindrical case 41. That is, when the first rod 45 enters into the cylindrical case 41, inner pressure of the cylindrical case 41 is increased to decrease a size of the foam of the first accumulator 57, and therefore, the first accumulator 57 is shrunk and deformed.

Note that, in the examples illustrated in FIGS. 2 and 3, the accumulator is provided in the base-portion room 48a. However, the accumulator may be formed in a cylindrical shape so that the first rod 45 is penetrated through its center hole, and be provided in a space of a part of the first holder 44. That is, the accumulator can be also provided on the opening-portion room 48b side.

In the end cover 42, an injection hole 42a for injecting the silicon oil O from outside into the cylindrical case 41 is provided. The injection hole 42a is closed by a setscrew 58 functioning as a plug, so that, after injecting the silicon oil O from the injection hole 42a into the cylindrical case 41, leakage of the silicon oil O to outside is prevented. An O ring 59 made of rubber is provided between an outer periphery of the end cover 42 and the inner periphery of the cylindrical case 41, and the O ring 59 seals a space between the end cover 42 and the cylindrical case 41.

Next, an operation of the first shock absorber 40 formed as described above is described in detail with reference to FIGS. 2 and 3.

### [RETRACTION PROCESS]

In a retraction process (pushing side) of the first shock absorber 40, the first rod 45 enters into the cylindrical case 41 as illustrated in FIG. 2 with an arrow 1. And then, the first accumulator 57 is shrunk and deformed by the entering of the first rod 45 into the cylindrical case 41. At this time, the silicon oil O flows from the base-portion room 48a to the opening-portion room 48b through the first main flow path 54 as illustrated in this figure with an arrow 2. Also, by the entering of the first rod 45 into the cylindrical case 41, the first piston 50 is moved to the rod main body 45a side (the opening-portion room 48b side) by the predetermined distance L1 relative to the small-diameter portion 45b.

In this manner, as illustrated in this figure with an arrow 3, each piston sub flow path 55 and each flow-path-member sub flow path 56 are connected with each other, so that the silicon oil O flows from the base-portion room 48a to the opening-portion room 48b through each of the sub flow paths 55 and 56. As described above, in the retraction process of the first shock absorber 40, the silicon oil O flows through both of the first main flow path 54 and the sub flow paths 55 and 56, and therefore, a large flow path area is secured between the base-portion room 48a and the opening-portion room 48b. Therefore, in the first shock absorber 40, the resistive force is almost not caused.

Here, when the first piston 50 passes through the second inner peripheral wall 49b side (damping region A1 the flow path area of the first main flow path 54 is decreased, and the flowing of the silicon oil O in the first main flow path 54 is limited. However, since the flow path area of each of the sub flow paths 55 and 56 is set to be sufficiently large, the resistive force is almost not caused in the first shock absorber 40. That is, in an entire stroke region of the first shock absorber 40, the first rod 45 can be smoothly entered into the cylindrical case 41.

### [STRETCH PROCESS]

In a stretch process (pulling side) of the first shock absorber 40, as illustrated in FIG. 3 with an arrow 4, the first rod 45 is pulled outside the cylindrical case 41. And then, the first accumulator 57 is swelled and deformed by the pulling of the first rod 45 outside the cylindrical case 41. At this time, the silicon oil O flows from the opening-portion room 48b to the base-portion room 48a through the first main flow path 54 as illustrated in this figure with an arrow 5. Also, by the pulling of the first rod 45 outside the cylindrical case 41, the first piston 50 is moved to the nut member 52 side (the base-portion room 48a side) by the predetermined distance L1 relative to the small-diameter portion 45b.

In this manner, the first piston 50 is closely abutted against the flange portion 52a of the nut member 52 to close each piston sub flow path 55 and each flow-path-member sub flow path 56, so that the flowing of the silicon oil O in each of sub flow paths 55 and 56 is shut down. As described above, in the stretch process of the first shock absorber 40, the silicon oil O flows through only the first main flow path 54, and the resistive force of the silicon oil O flowing from the opening-portion room 48b to the base-portion room 48a is increased. In this manner, in the first shock absorber 40, the predetermined resistive force is caused.

Here, when the first piston 50 moves on the second inner peripheral wall 49b side (damping region A1) toward the opening portion 43a, the flow path area of the first main flow path 54 is gradually decreased. And then, the flowing of the silicon oil O in the first main flow path 54 is gradually limited, and the resistive force of the first shock absorber 40 is gradually increased. As described above, in the first shock absorber 40, the resistive force is maximized in a later stage of the stretch process, that is, when the first piston 50 exists in a vicinity of the opening portion 43a on the second inner peripheral wall 49b side. In this manner, impacts caused by movement of the movable member 20, the reciprocating table fixed on the movable member 20, and the receiving plate 21 (see in FIG. 1) can be eased.

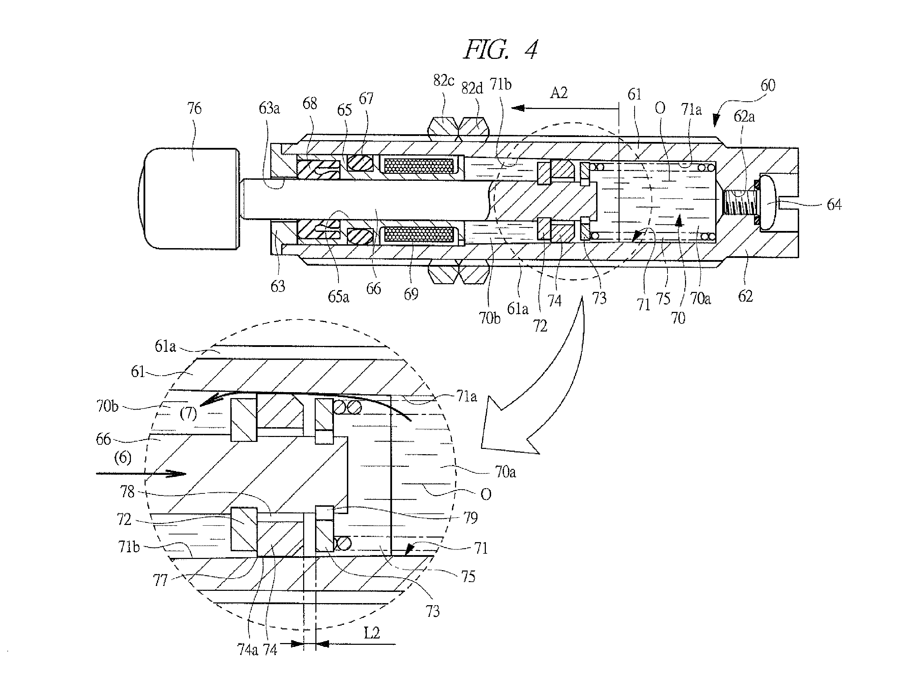

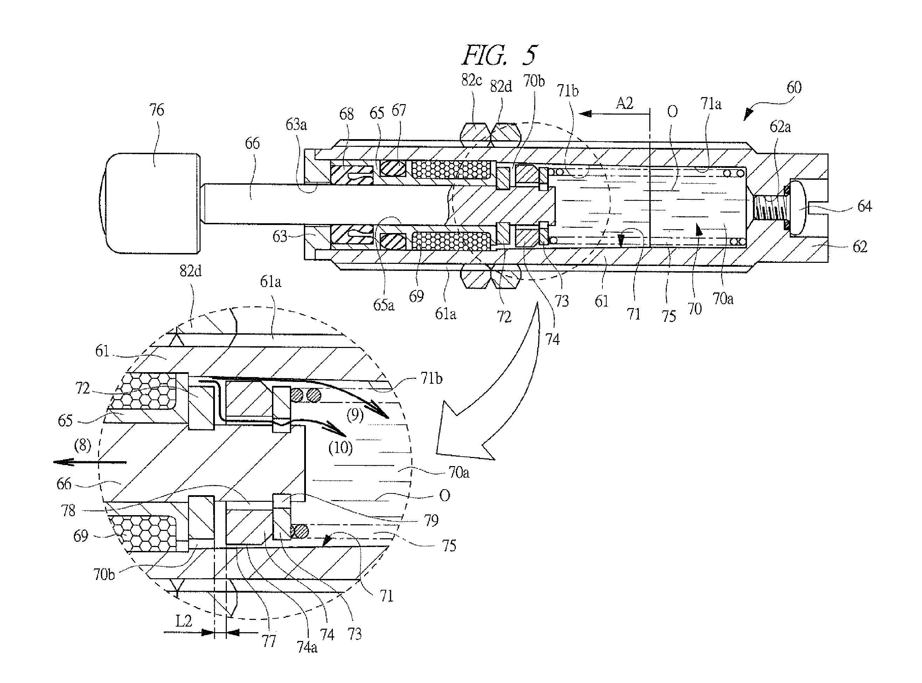

FIG. 4 is a cross-sectional view of a second shock absorber (at retraction of a second piston) used in the shock absorber unit in FIGS. 1A and 1B, and FIG. 5 is a cross-sectional view of the second shock absorber (at stretch of the second piston) used in the shock absorber unit in FIGS. 1A and 1B.

As illustrated in FIGS. 4 and 5, the second shock absorber 60 includes a cylindrical case 61 made of steel or others in a substantially bottomed-cylindrical shape. A base portion 62 is provided on one end of the cylindrical case 61, and a rod cover 63 is attached to the other end of the cylindrical case 61. The other end of the cylindrical case 61 is opened through an opening portion 63a of the rod cover 63. Here, the cylindrical case 61, base portion 62, and rod cover 63 configure the second cylinder according to the present invention.

A male-screw portion 61a to be screwed into the supporting hole 81 b (see in FIG. 1) of the supporting member 80 is provided on an outer periphery of the cylindrical case 61, and a pair of hexagonal nuts 82c and 82d are screwed to connect the male-screw portion 61a. In the base portion 62, there is provided an injection hole 62a for injecting the silicon oil O from outside into the cylindrical case 61. The injection hole 62a is closed by a setscrew 64 functioning as a plug, so that, after injecting the silicon oil O from the injection hole 62a into the cylindrical case 61, leakage of the silicon oil O to outside is prevented.

A second holder 65 formed in a substantially cylindrical shape is attached to the rod cover 63 side of the cylindrical case 61, and a second rod-guiding hole 65a extending in the axial direction is provided in the second holder 65. The second rod-guiding hole 65a slidably supports a second rod 66, and the second rod-guiding hole 65a guides to smoothly move the second rod 66 relative to the cylindrical case 61.

An O ring 67 made of rubber is provided between an outer periphery of the second holder 65 and an inner periphery of the cylindrical case 61, and the O ring 67 seals a space between the second holder 65 and the cylindrical case 61. A rod packing 68 made of rubber is attached to the rod cover 63 side of the second rod-guiding hole 65a, and the rod packing 68 is slidably contacted with the second rod 66. The rod packing 68 seals a space between the second rod 66 and the second rod-guiding hole 65a.

A second accumulator 69 made of an elastic member consisting of foam rubber or others and formed in a substantially cylindrical shape is provided on an opposite side (the opening-portion room 70b side) to the rod packing 68 in the axial direction of the second holder 65. The second accumulator 69 absorbs volume increase caused inside the cylindrical case 61 by entering of the second rod 66 into the cylindrical case 61. That is, when the second rod 66 enters into the cylindrical case 61, inner pressure of the cylindrical case 61 is increased, and the foam of the second accumulator 69 become small, and therefore, the second accumulator 69 is shrunk and deformed. Note that the second accumulator may be provided in the base-portion room as illustrated in FIGS. 2 and 3.

A liquid storage room 70 is provided inside the cylindrical case 61, and silicon oil "O" as liquid is filled inside the liquid storage room 70. The liquid storage room 70 is surrounded by an inner peripheral wall 71 of the cylindrical case 61. In the inner peripheral wall 71 on one end of the cylindrical case 61, a first inner peripheral wall 71a whose inner diameter is constant toward the axial direction of the cylindrical case 61 is formed. In the inner peripheral wall 71 on the other end of the cylindrical case 61, a second inner peripheral wall 71b b having a taper shape whose diameter is gradually increased toward the rod cover 63 side of the cylindrical case 61 is formed. Here, the second inner peripheral wall 71 b configures a second opening-area adjusting wall according to present invention.

One end of the second rod 66 is provided inside the cylindrical case 61, and each of a supporting member 72 and a flow-path member 73 formed in a substantially disk shape is fixed to the other end of the second rod 66 along the axial direction of the second rod 66 so as to have a predetermined interval. A second piston 74 is slidably attached between the supporting member 72 and the flow-path member 73 in the axial direction of the second rod 66, and the second piston 74 divides the liquid storage room 70 into a base-portion room 70a and an opening-portion room 70b. The second piston 74 is formed in a substantially disk shape, and a thickness of the second piston 74 is smaller than a space size between the supporting member 72 and the flow-path member 73. In this manner, the second piston 74 can be moved between the supporting member 72 and the flow-path member 73 by a predetermined distance "L2".

On one end of the second rod 66, a compression coil spring 75 is provided between the flow-path member 73 and the base portion 62. The compression coil spring 75 to which a predetermined initial load (shrinking) is applied is provided between the flow-path member 73 and the base portion 62, so that pressing force is applied to the second rod 66 in a direction that the second rod 66 is protruded outside the cylindrical case 61.

The other end of the second rod 66 is provided outside the cylindrical case 61, a cap member 76 made of a resin material such as plastic is attached to the other end of the second rod 66. The other end of the cap member 76 is abutted against the receiving plate 21 (see in Fig. 1) of the pneumatic actuator 10. In this manner, noises or others are prevented.

Between the inner peripheral wall 71 of the cylindrical case 61 and the outer peripheral wall 74a of the second piston 74, there is provided a second main flow path 77 allowing the movement of the silicon oil O from the base-portion room 70a to the opening-portion room 70b when the second piston 74 is moved relative to the cylindrical case 61. When the second piston 74 moves on the second inner peripheral wall 71 b side toward the base portion 62 side, a flow area (opening area) of the second main flow path 77 is gradually decreased, and the second main flow path 77 is gradually narrowed, and therefore, the flow resistance of the silicon oil O is gradually increased. On the other hand, when the second piston 74 moves on the first inner peripheral wall 71a side, the flow area of the second main flow path 77 is minimized, and therefore, the flow resistance of the silicon oil O is maximized.

Between an inner periphery of the second piston 74 and an outer periphery of the second rod 66, a piston sub flow path 78 for connecting between the base-portion room 70a and the opening-portion room 70b is provided. A plurality (for example, four pieces which are provided in each constant interval) of the piston sub flow paths 78 are provided inside the second piston 74 in the diameter direction and along the peripheral direction. The other end of each piston sub flow path 78 is closed by the supporting member 72 when the second piston 74 is closely abutted against the supporting member 72, so that each piston sub flow path 78 is shut down. Here, the supporting member 72 configures a second sub-flow-path opening/closing member according to the present invention.

A flow-path-member sub flow path 79 for connecting between the base-portion room 70a and the opening-portion room 70b is provided in the flow path member 73. A plurality (for example, four pieces which are provided in each constant interval) of the flow-path-member sub flow paths 79 are provided inside the flow path member 73 in the diameter direction and along the peripheral direction. Each piston sub flow path 78 and each flow-path-member sub flow path 79 are connected with each other, and the sub flow paths 78 and 79 configure a second sub flow path according to the present invention.

Next, an operation of the second shock absorber 60 formed as described above is described in detail with reference to FIGS. 4 and 5.

### [RETRACTION PROCESS]

In a retraction process (pushing side) of the second shock absorber 60, the second rod 66 enters into the cylindrical case 61 as illustrated in FIG. 4 with an arrow 6. And then, the second accumulator 69 is shrunk and deformed by the entering of the second rod 66 into the cylindrical case 61. At this time, the silicon oil O flows from the base-portion room 70a to the opening-portion room 70b through the second main flow path 77 as illustrated in this figure with an arrow 7. Also, by the entering of the second rod 66 into the cylindrical case 61, the second piston 74 is moved toward the supporting member 72 side (the opening-portion room 70b side) by the predetermined distance L2 relative to the second rod 66.

In this manner, the second piston 74 is closely abutted against the supporting member 72 to close each piston sub flow path 78, so that the flowing of the silicon oil O in each of the sub flow paths 78 and 79 is shut down. As described above, in the retraction process of the second shock absorber 60, the silicon oil O flows through only the second main flow path 77, and the resistive force of the silicon oil O flowing from the base-portion room 70a to the opening-portion room 70b is increased. In this manner, in the second shock absorber 60, the predetermined resistive force is caused.

Here, when the second piston 74 moves on the second inner peripheral wall 71b side (damping region A2) toward the base portion 62, the flow path area of the second main flow path 77 is gradually decreased. And then, the flowing of the silicon oil O in the second main flow path 77 is gradually limited, and the resistive force of the second shock absorber 60 is gradually increased. As described above, in the second shock absorber 60, the resistive force is maximized in a later stage of the drawing process, that is, when the second piston 74 passes through the first inner peripheral wall 71a side. In this manner, impacts caused by movement of the movable member 20, the reciprocating table fixed on the movable member 20, and the receiving plate 21 (see in FIG. 1) can be eased.

### [STRETCH PROCESS]

In a stretch process of the second shock absorber 60, as illustrated in FIG. 5 with an arrow 8, the second rod 66 is protruded outside the cylindrical case 61 by spring force of the compression coil spring 75. And then, the second accumulator 69 is swelled and deformed by the protrusion of the second rod 66 outside the cylindrical case 61. At this time, as illustrated in this figure with an arrow 9, the silicon oil O flows from the opening-portion room 70b to the base-portion room 70a through the second main flow path 77. Also, by the protrusion of the second rod 66 outside the cylindrical case 61, the second piston 74 is moved toward the flow path member 73 side (the base-portion room 70a side) by the predetermined distance L2 relative to the second rod 66.

In this manner, as illustrated in this figure with an arrow 10, each piston sub flow path 78 and each flow-path-member sub flow path 79 are connected with each other, so that the silicon oil O flows from the opening-portion room 70b to the base-portion room 70a through each of the sub flow paths 78 and 79. As described above, in the stretch process of the second shock absorber 60, the silicon oil O flows through both of the second main flow path 77 and each of the sub flow paths 78 and 79, and therefore, a large flow path area is secured between the base-portion room 70a and the opening-portion room 70b. Therefore, in the second shock absorber 60, the resistive force is almost not caused, so that the second rod 66 can be immediately protruded outside the cylindrical case 61 by the spring force of the compression coil spring 75.

Here, when the second piston 74 passes through the first inner peripheral wall 71a side, the flow path area of the second main flow path 77 is decreased, and the flowing of the silicon oil O in the second main flow path 77 is limited. However, since the flow path area of each of the sub flow paths 78 and 79 is set to be sufficiently large, the resistive force is almost not caused in the second shock absorber 60. That is, in an entire stroke region of the second shock absorber 60, the second rod 66 can be smoothly protruded outside the cylindrical case 61.

According to the first shock absorber 40 in the first embodiment as formed above, the first accumulator 57 for absorbing the volume increase caused inside the cylindrical case 41 by the entering of the first rod 45 into the cylindrical case 41 is provided in the base-portion room 48a, the first main flow path 54 in which the silicon oil O flows when the first piston 50 is moved relative to the cylindrical case 41 is provided between the inner peripheral wall 49 of the cylindrical case 41 and the outer peripheral wall 50a of the first piston 50, and the second inner peripheral wall 49b for gradually decreasing the opening area of the first main flow path 54 by the movement of the first piston 50 toward the opening-portion room 48b side is provided in the inner peripheral wall 49 of the cylindrical case 41. Therefore, the flow resistance of the silicon oil O flowing through the first main flow path 54 is increased as the first piston 50 is moved closer toward the opening room 48b side of the cylindrical case 41, and therefore, the first shock absorber 40 can be the shock absorber of generating the resistive force (damping force) on the pulling side.

Also, according to the first shock absorber 40 in the first embodiment, the first piston 50 is slidably provided in the first rod 45, the piston sub flow path 55 for connecting between the base-portion room 48a and the opening-portion room 48b is provided between the inner periphery of the first piston 50 and the outer periphery of the first rod 45, and the nut member 52 for shutting down the piston sub flow path 55 when the first piston 50 is moved toward the opening-portion room 48b side relative to the first rod 45 is provided in the first rod 45. Therefore, the difference between the resistive forces generated on the pulling side and the pushing side can be increased, and, for example, a sufficiently-large resistive force can be generated on the pulling side and almost no resistive force can be generated on the pushing side.

Further, according to the first shock absorber 40 in the first embodiment, since the fixed portion 45d fixed at the receiving plate 21 of the pneumatic actuator 10 is provided on the other end of the first rod 45, the first rod 45 and the receiving plate 21 can be fixedly held with each other. Therefore, the first shock absorber 40 can be exactly functioned as the pulling-side shock absorber.

Still further, according to the first shock absorber 40 in the first embodiment, since the first accumulator 57 is made of the elastic member consisting of the foam rubber, the first accumulator 57 can be formed of one component, so that the number of components can be reduced to suppress the manufacturing cost.

Still further, according to the first shock absorber unit 30 in the first embodiment, the first shock absorber 40 is the pulling-side shock absorber, the second shock absorber 60 is the pushing-side shock absorber, and the supporting member 80 for supporting the respective rods 45 and 66 of the shock absorbers 40 and 60 so that they are parallel to each other is provided. Therefore, each of the shock absorbers 40 and 60 are collected by the supporting member 80, so that the shock absorber unit 30 can be arranged only on one side in the movement direction of the receiving plate 21 of the pneumatic actuator 10. In this manner, the arrangement space for the shock absorber unit 30 can be downsized, so that the adjustment operation for the shock absorber unit 30 can be easily performed and the arrangement operation for the pneumatic actuator 10 can be simplified.

Still further, according to the first shock absorber unit 30 in the first embodiment, the nut member 52 for shutting down each of the sub flow paths 55 and 56 by the movement of the first piston 50 toward the opening-portion room 48b side relative to the first rod 45 is provided in the first shock absorber 40, and the supporting member 72 for shutting down each of the sub flow paths 78 and 79 by the movement of the second piston 74 toward the base-portion room 70a side relative to the second rod 66 is provided in the second shock absorber 60. In this manner, in each of the shock absorbers 40 and 60, the difference between the resistive forces generated on the pulling side and the pushing side can be increased.

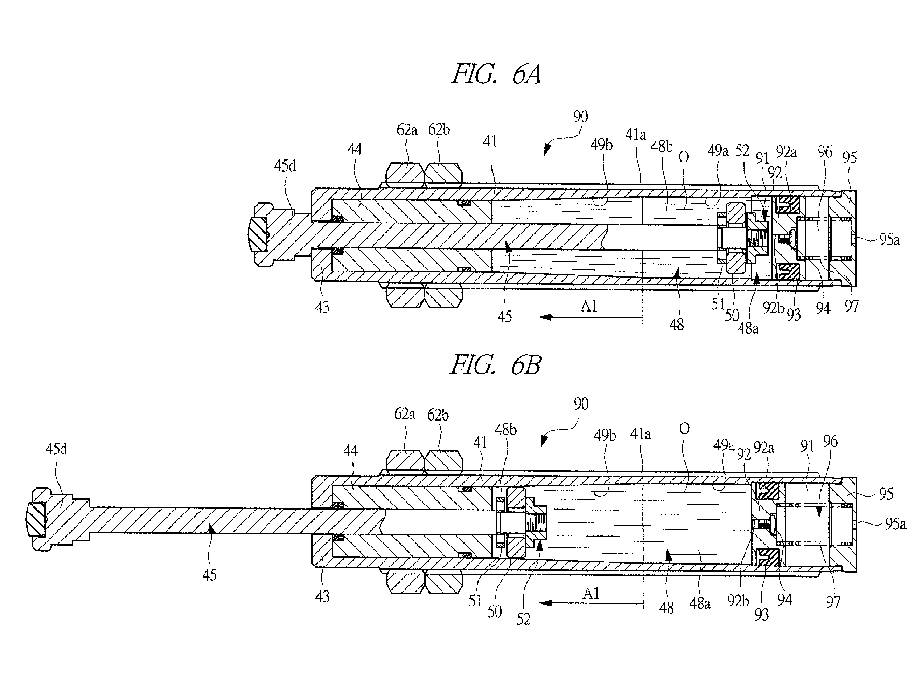

Next, a second embodiment of the present invention is described in detail with reference to figures. Note that components having the same function as those of the above-described first embodiment are denoted by the same reference symbols, and the repetitive description thereof is omitted. FIGS. 6A and 6B are cross-sectional views of the first shock absorber (at retraction/ stretch of the first piston) according to the second embodiment.

In a first shock absorber 90 according to the second embodiment, only a structure of a first accumulator (accumulator) is different from that of the first shock absorber 40 according to the first embodiment.

A free-piston storage room 91 forming a part of the base-portion room 48a is provided on one end of the cylindrical case 41. In the free-piston storage room 91, a free piston 92 is slidably provided in the axial direction of the cylindrical case 41. A ring-shaped groove 92a is provided in an outer periphery of the free piston 92 along a peripheral direction of the free piston 92, and a packing seal 93 functioning as a seal member is attached to the ring-shaped groove 92a. The packing seal 93 is provided between the outer periphery of the free piston 92 and the inner periphery of the cylindrical case 41 to seal a space between both of them.

In a substantially center portion of the free piston 92, an injection hole 92b for injecting the silicon oil O from outside into the cylindrical case 41 is provided. The injection hole 92b is closed by a setscrew 94 functioning as a plug, so that, after injecting the silicon oil O from the injection hole 92b into the cylindrical case 41, leakage of the silicon oil O to outside is prevented.

A cover member 95 is attached to one end of the cylindrical case 41, and the one end of the cylindrical case 41 is closed by the cover member 95. An air room 96 is provided between the cover member 95 and the free piston 92, and the air room 96 is connected to outside through an air vent hole 95a provided in a substantially center portion of the cover member 95.

A compression coil spring 97 functioning as a spring, to which a predetermined initial load (shrinking) is applied, is provided between the free piston 92 and the cover member 95, and the compression coil spring 97 pressures the free piston 92 toward the opening-portion room 48b of the cylindrical case 41. Here, the free piston 92, packing seal 93, and compression coil spring 97 configures the accumulator and the first accumulator according to the present invention.

As illustrated in FIG. 6A, when the first rod 45 enters into the cylindrical case 41, the free piston 92 is moved to one end of the cylindrical case 41 by the entering of the first rod 45 into the cylindrical case 41, and the volume increase of the liquid storage room 48 caused inside the cylindrical case 41 is absorbed. At this time, the air inside the air room 96 is exhausted outside through the air vent hole 95a. On the other hand, as illustrated in FIG. 6B, when the first rod 45 protrudes outside the cylindrical case 41, the free piston 92 is moved to the other end of the cylindrical case 41 by the protrusion of the first rod 45 outside the cylindrical case 41. At this time, the outside air is supplied into the air room 96 through the air vent hole 95a.

Also in the first shock absorber 90 according to the second embodiment as formed above, the same functional effects except for the functional effects of the first accumulator can be obtained. In addition to this, in the first shock absorber 90 according to the second embodiment, the first accumulator (accumulator) includes: the free piston 92 sliding through the free piston storage room 91; the packing seal 93 provided between the outer periphery of the free piston 92 and the inner periphery of the cylindrical case 41; and the compression coil spring 97 pressuring the free piston 92 toward the opening-portion room 48b. Therefore, durability of the first accumulator (accumulator) is increased, so that long life of the first shock absorber (shock absorber) can be achieved.

It is needless to say that the present invention is not limited to the foregoing embodiments and various modifications and alterations can be made within the scope of the summary of the present invention. For example, it is described that the second inner peripheral wall 49b having the taper shape is as the opening area adjusting wall according to the present invention, and the resistive forces of the first shock absorbers 40 and 90 is linearly changed. However, the present invention is not limited to this, and the opening area adjusting wall can be formed in a step shape, and the resistive forces of the first shock absorbers can be changed stepwise.

Also, in the second shock absorber 60 illustrated in FIGS. 4 and 5, the second accumulator 69 formed in the substantially cylindrical shape is provided on the opening-portion room 70b side. However, the present invention is not limited to this, and a free-piston-type accumulator provided on the base-portion room side as illustrated in FIGS. 6A and 6B can be adopted as the second accumulator.

## Claims

1. A shock absorber comprising:
a cylinder in which liquid is filled and which has a base portion and an opening portion;
a holder which is attached to the opening portion of the cylinder and has a rod-guiding hole;
a rod which is slidably supported by the rod-guiding hole, whose one end is provided inside the cylinder, and whose other end is provided outside the cylinder;
a piston which is provided to the one end of the rod and divides an inside of the cylinder into a base-portion room and an opening-portion room;
an accumulator which absorbs volume increase caused inside the cylinder by entering of the rod into the cylinder;
a main flow path which is provided between an inner peripheral wall of the cylinder and an outer peripheral wall of the piston and in which the liquid flows when the piston is moved relative to the cylinder; and
an opening area adjusting wall which forms the inner peripheral wall of the cylinder and by which an opening area of the main flow path is gradually decreased by movement of the piston toward the opening-portion room side.

2. The shock absorber according to claim 1, wherein
the piston is slidably provided to the rod,
a sub flow path for connecting between the base-portion room and the opening-portion room is provided between an inner periphery of the piston and an outer periphery of the rod, and
a sub-flow-path opening/closing member for shutting down the sub flow path when the piston is moved toward the opening-portion room side relative to the rod is provided to the rod.

3. The shock absorber according to claim 1 or 2, wherein
a fixed portion which is fixed at a movable portion of an actuator is provided to the other end of the rod.

4. The shock absorber according to claim 1 or 2, wherein
the accumulator is made of an elastic material consisting of foam rubber.

5. The shock absorber according to claim 1 or 2, wherein
the accumulator includes: a free piston which slides through the base-portion room; a seal member which is provided between an outer periphery of the free piston and an inner periphery of the cylinder; and a spring which pressures the free piston toward the opening-portion room.

6. A shock absorber unit comprising a first shock absorber, a second shock absorber, and a supporting member,
the first shock absorber comprising:
a first cylinder in which liquid is filled and which has a base portion and an opening portion;
a first holder which is attached to the opening portion of the first cylinder and has a first rod-guiding hole;
a first rod which is slidably supported by the first rod-guiding hole, whose one end is provided inside the first cylinder, and whose other end is provided outside the first cylinder;
a first piston which is provided to the one end of the first rod and divides an inside of the first cylinder into a base-portion room and an opening-portion room;
a first accumulator which absorbs volume increase caused inside the first cylinder by entering of the first rod into the first cylinder;
a first main flow path which is provided between an inner peripheral wall of the first cylinder and an outer peripheral wall of the first piston and in which the liquid flows when the first piston is moved relative to the first cylinder; and
a first opening area adjusting wall which forms the inner peripheral wall of the first cylinder and by which an opening area of the first main flow path is gradually decreased by movement of the first piston toward the opening-portion room side,
the second shock absorber comprising:
a second cylinder in which liquid is filled and which has a base portion and an opening portion;
a second holder which is attached to the opening portion of the second cylinder and has a second rod-guiding hole;
a second rod which is slidably supported by the second rod-guiding hole, whose one end is provided inside the second cylinder, and whose other end is provided outside the second cylinder;
a second piston which is provided to the one end of the second rod and divides an inside of the second cylinder into a base-portion room and an opening-portion room;
a second accumulator which absorbs volume increase caused inside the second cylinder by entering of the second rod into the second cylinder;
a second main flow path which is provided between an inner peripheral wall of the second cylinder and an outer peripheral wall of the second piston and in which the liquid flows when the second piston is moved relative to the second cylinder; and
a second opening area adjusting wall which forms the inner peripheral wall of the second cylinder and by which an opening area of the second main flow path is gradually decreased by movement of the second piston toward the base-portion room side, and
the supporting member which supports the first and second shock absorbers so that the first and second rods of the respective first and second shock absorbers are parallel to each other.

7. The shock absorber unit according to claim 6, wherein
the first piston is slidably provided to the first rod,
a first sub flow path for connecting between the base-portion room and the opening-portion room is provided between an inner periphery of the first piston and an outer periphery of the first rod,
a first sub-flow-path opening/closing member for shutting down the first sub flow path when the first piston is moved toward the opening room side relative to the first rod is provided to the first rod,
the second piston is slidably provided to the second rod,
a second sub flow path for connecting between the base-portion room and the opening-portion room is provided between an inner periphery of the second piston and an outer periphery of the second rod, and
a second sub-flow-path opening/closing member for shutting down the second sub flow path when the second piston is moved toward the base-portion room side relative to the second rod is provided to second the rod.

8. The shock absorber unit according to claim 6 or 7, wherein
a fixed portion which is fixed at a movable portion of an actuator is provided to the other end of the first rod.

9. The shock absorber unit according to claim 6 or 7, wherein
at least one of the first accumulator or the second accumulator is made of an elastic material consisting of foam rubber.

10. The shock absorber unit according to claim 6 or 7, wherein
at least one of the first accumulator or the second accumulator includes: a free piston which slides through the base-portion room; a seal member which is provided between an outer periphery of the free piston and an inner periphery of the first or second cylinder; and a spring which pressures the free piston toward the opening-portion room.
